# EUROPEAN PATENT APPLICATION

(11) **EP 4 187 464 A1**
(43) Date of publication of application: **31.05.2023**
(21) Application number: 22205465.2
(22) Date of filing: 04.11.2022
(51) Int. Cl.: G06Q 20/14, G07B 15/06, G08G 1/017, H04W 4/44

(54) **PAYMENT METHOD AND SYSTEM FOR A FLEET, ELECTRONIC DEVICE AND STORAGE MEDIUM**

(30) Priority: 30.11.2021 CN 202111448504
(71) Applicant: Beijing Tusen Zhitu Technology Co., Ltd., Beijing 100016 (CN)
(72) Inventor: SUN, Jiaxin, Beijing, 100016 (CN); WU, Nan, Beijing, 100016 (CN)
(74) Representative: Murgitroyd & Company

(57) **Abstract**

The present invention discloses a payment method and system for a fleet, an electronic device and a storage medium. The method includes: sending payment request information of a fleet to a roadside payment terminal, such that the roadside payment terminal sends the payment request information of the fleet to a payment server; receiving, from the roadside payment terminal, fleet payment information generated by the payment server; and performing a payment operation according to the fleet payment information. According to the present invention, the traveling efficiency of the fleet can be improved.

## Description

### TECHNICAL FIELD

The present invention relates to the technical field of automatic driving, and more particularly, to a payment method and system for a fleet, an electronic device and a storage medium.

### BACKGROUND

Automatic vehicle driving in formation can improve the traffic efficiency and reduce the fuel consumption, and thus has broad application prospects in the field of intelligent transportation in the future. However, for the toll payment of an automatic driving fleet, the fleet cannot complete the toll payment through manual interaction under an unmanned operation mode, so a non-artificial payment mode must be used.

At present, in a case that a free-flow no-stop payment scheme for separate vehicles is used, respective vehicles in the fleet will pay one by one in a separate vehicle payment mode and then pass through a toll station. Since a large traffic flow near the toll station is easy to cause a congestion, social vehicles (vehicles which are not included in the fleet) are easy to interfere with an automatic driving leading vehicle and fleet formation driving, resulting in complex driving scenarios. To cope with such complex scenarios, the development difficulty of automatic driving systems will be increased. In addition, payment failure will occur in the case that a vehicle in the fleet is not equipped with a payment apparatus or the payment apparatus is not compatible with a payment terminal of a toll station, or a payment module of the payment terminal is missing or faulty, such that the automatic driving fleet cannot pass the toll station completely, resulting in a congestion at the toll station and reduced efficiency of the fleet.

### SUMMARY

Embodiments of the present invention provide a method and system for fleet payment, an electronic device and a storage medium, in order to solve at least one of the problems mentioned above.

An embodiment of the present invention provides a method for fleet payment. A fleet includes a first vehicle and at least one second vehicle. The method includes: sending payment request information of the fleet to a roadside payment terminal, such that the roadside payment terminal sends the payment request information of the fleet to a payment server, the payment request information of the fleet including payment request information of the first vehicle and payment request information of the at least one second vehicle, the payment request information of the first vehicle being generated based on an identity of a toll station corresponding to the first vehicle, and the payment request information of the second vehicle being generated based on an identity of a toll station corresponding to the second vehicle; receiving fleet payment information generated by the payment server from the roadside payment terminal; and performing a payment operation according to the fleet payment information.

An embodiment of the present invention further provides a fleet payment system, including a vehicle-mounted terminal, the roadside payment terminal, the payment server and the fleet operation management platform which are configured to implement the above method.

An embodiment of the present invention further provides an electronic device. The electronic device includes a memory, a processor and a computer program that is stored in the memory and operable on the processor, the processor, when executing the program, being configured to implement the steps of the above method.

An embodiment of the present invention further provides a computer-readable storage medium configured to store a computer program therein, the computer program, when executed by a processor, being configured to implement the steps of the above method.

According to the embodiments of the present invention, the payment request information of the fleet is sent to the roadside payment terminal and forwarded to the payment server, the fleet payment information generated by the payment server from the roadside payment terminal is then received, and the payment operation is then performed according to the fleet payment information, without separate payment of respective vehicles in the fleet, thereby ensuring that the fleet can pass through the toll station smoothly and improving the travelling efficiency of the fleet.

### BRIEF DESCRIPTION OF THE DRAWINGS

To describe the embodiments of the present invention or the technical solutions in the prior art more clearly, the following briefly introduces the accompanying drawings required for describing the embodiments or the descriptions in the prior art. Apparently, the accompanying drawings in the following description show merely some embodiments of the present invention, and a person of ordinary skill in the art may still derive other drawings from these accompanying drawings without paying creative efforts.
FIG. 1 is a flowchart of a payment method for a fleet according to an embodiment of the present invention;
FIG. 2 is a structural block diagram of a payment system for a fleet according to an embodiment of the present invention;
FIG. 3 is an exemplary structural block diagram a payment system for an automatic driving fleet according to an embodiment of the present invention;
FIG. 4 is a schematic diagram of a payment scenario I of an automatic driving fleet according to an embodiment of the present invention;
FIG. 5 is a schematic diagram of a payment scenario II of an automatic driving fleet according to an embodiment of the present invention;
FIG. 6(1) and FIG. 6(2) are schematic diagrams of a payment scenario III of an automatic driving fleet according to an embodiment of the present invention;
FIG. 7 is a schematic diagram of a payment scenario IV of an automatic driving fleet according to an embodiment of the present invention;
FIG. 8A and 8B are detailed payment flowcharts of an automatic driving fleet according to an embodiment of the present invention; and
FIG. 9 is a schematic block diagram of the system composition of an electronic device 900 according to an embodiment of the present invention.

### DETAILED DESCRIPTION

In order to make the objectives, technical solutions and advantages of the embodiments of the present invention more clearly, the technical solutions in the embodiments of the present invention will be described clearly and completely in conjunction with the accompanying drawings in the embodiments of the present invention. Apparently, the described embodiments are merely some embodiments, rather than all embodiments, of the present invention. Based on the embodiments of the present disclosure, all other embodiments derived by a person of ordinary skill in the art without creative efforts shall fall within the protection scope of the present invention.

In the existing automatic payment scheme for an automatic driving fleet, a toll station congestion caused by payment failure easily occurs, resulting in reduced operation efficiency of the fleet. Meanwhile, the current automatic payment scheme for the automatic driving fleet does not fully consider the following circumstances: (1) how to help the fleet complete the payment by means of other ways and pass through a payment lane after the payment fails in the case that a vehicle-mounted payment apparatus is not compatible; (2) after the fleet completes the payment, the actual amount of payment changes, for example, information of an actually passing fleet is inconsistent with information of a fleet subjected to advance payment, resulting in a passage failure of the fleet; and (3) the fleet undergoes the problems of bad credit or fines caused by no payment/the payment failure when the fleet passes a lever-free channel.

Based on this, an embodiment of the present invention provides a fleet payment scheme. The scheme can implement the automatic payment in the traveling process of the automatic driving fleet, and ensure that the automatic driving fleet passes through the toll station smoothly, thereby improving the traveling efficiency of the fleet. The embodiments of the present invention will be described in detail below with reference to the accompanying drawings.

### Embodiment 1

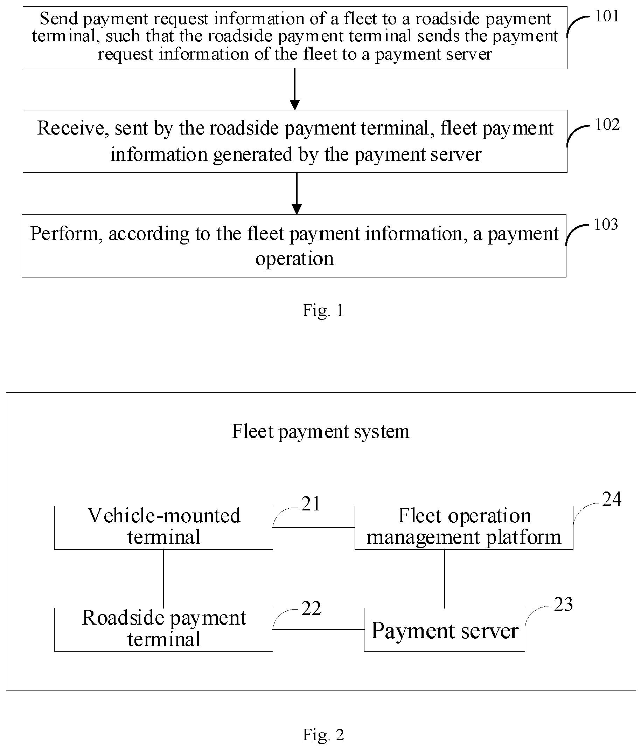

This embodiment of the present invention provides a payment method for an automatic driving fleet (hereinafter referred to as a fleet). FIG. 1 is a flowchart of this method for fleet payment. As shown in FIG. 1, this method includes the following steps 101-103.

In step 101: sending payment request information of the fleet to a roadside payment terminal, such that the roadside payment terminal sends the payment request information of the fleet to a payment server, the payment request information of the fleet including payment request information of a first vehicle and payment request information of at least one second vehicle, the payment request information of the first vehicle being generated based on an identity (ID) of a toll station corresponding to the first vehicle, the payment request information of the second vehicle being generated based on an identity of a toll station corresponding to the second vehicle.

In one embodiment, the payment request information can be generated based on an identity of a previous toll station, an identity of a current toll station, a vehicle load and a number of axles of the vehicle.

In this embodiment, the roadside payment terminal may be installed at the current toll station, and configured to broadcast the identity of the current toll station, as well as opening situations of respective lanes and passable models. The roadside payment terminal may also interact with the first vehicle and the payment server respectively.

The payment server is configured to perform payment according to the payment request information uploaded by the roadside payment terminal, and send the payment to the roadside payment terminal.

In step 102: receiving, from the roadside payment terminal, fleet payment information generated by the payment server.

In step 103: performing a payment operation according to the fleet payment information.

The payment request information of the fleet is sent to the roadside payment terminal and forwarded to the payment server, the fleet payment information from the payment server forwarded by the roadside payment terminal is then received, and the payment operation is then performed according to the fleet payment information, without separate payment of respective vehicles in the fleet, thereby shortening unnecessary waiting time, ensuring that the fleet can pass through the toll station smoothly and improving the traveling efficiency of the fleet.

Preferably, the above-described steps 101-103 may be performed in the first vehicle, wherein the first vehicle may be a leading vehicle, and the second vehicle may be a following vehicle. Alternatively, the first vehicle may also be a vehicle traveling anywhere in the fleet. For the entire fleet, which vehicle that performs the steps 101-103 may be set according to actual situations, which will not be limited in the present invention.

For ease of description, this embodiment of the present invention is described in detail by taking the first vehicle performing the above-mentioned steps 101-103 as an example.

Prior to performing the step 101, the first vehicle will receive the identity of current toll station broadcast by the roadside payment terminal; and then, the first vehicle may send the identity of the current toll station to a fleet operation management platform.

The first vehicle may receive passage certificate information from the payment server from the roadside payment terminal in response to the completion of the payment operation in the step 103, the passage certificate information indicating that the first vehicle has completed the payment and can pass through the corresponding toll station.

The first vehicle may send the fleet payment information to the fleet operation management platform in response to the failure of performing the payment operation in the step 103, such that the fleet operation management platform performs the payment operation. In this way, the problems of toll station congestion and reduced fleet traveling efficiency in the prior art due to the payment failure of the fleet, and the problem of bad credit or fines due to the payment failure of the fleet can be both overcome.

The failure of performing the payment operation here may, for example, refer the payment failure caused when the first vehicle is not equipped with an electronic payment terminal or the electronic payment terminal is incompatible with the roadside payment terminal or caused by other reasons. The electronic payment terminal here is configured to perform the payment operation.

After the completion of the payment operation in the step 103, the first vehicle may also receive payment abnormality information generated by the payment server from the roadside payment terminal, the payment abnormality information indicating that an amount actually due from the fleet is inconsistent with an amount in the fleet payment information. The amount actually due from by the fleet is determined according to vehicle information obtained by the roadside payment terminal from the outside of the vehicle, such as the identified vehicle identity information, the number of vehicle axles, and the actual vehicle load information obtained by weighing.

The first vehicle performs a supplementary payment operation according to this payment abnormality information, in the case that the payment abnormality situation refers that the amount actually due from the fleet is greater than the amount in the fleet payment information, for example, the passing fleet includes a vehicle that does not appear in the fleet's payment request information, or the vehicle information in the payment request information differs from an actual situation, for example, the number of vehicle axles reported is less than the actual number of vehicle axles. The first vehicle may further send the payment abnormality information to the fleet operation management platform in response to the failure of performing the supplementary payment operation, such that the fleet operation management platform performs a corresponding supplementary payment operation.

The payment server will perform a refund operation and the first vehicle will receive refund information from the payment server forwarded by the roadside payment terminal, in the case that the payment abnormality situation refers that the amount actually due from the fleet is less than the amount in the fleet payment information, for example, a corresponding vehicle in payment request information of a fleet does not pass through a toll station, or the vehicle information in the payment request information differs from an actual situation, for example, the number of vehicle axles reported is greater than the actual number of vehicle axles.

In one embodiment, the first vehicle may also receive lane opening status information from the current toll station broadcast by the roadside payment terminal. At this time, the first vehicle may select a passable lane according to the lane opening status information of the current toll station.

Preferably, the first vehicle may select the passable lane based on received traffic condition information and the lane opening status information of the current toll station. Through traffic condition information, congestion information of respective open lanes at the current toll station can be known in time, so as to select a passable lane well. This traffic condition information can be obtained through a third-party dynamic map, a roadside terminal broadcast, etc., which will not be limited herein.

In the case that the first vehicle selects one passable lane, the first vehicle sends the selected passable lane to the second vehicle, such that the second vehicle travels according to the selected passable lane.

In the case that the first vehicle selects a plurality of passable lanes, the first vehicle assigns passable lanes to the vehicles in the fleet, and then sends the respective passable lanes to the corresponding second vehicles, such that the second vehicles travel according to the received passable lanes. Therefore, a speed at which the fleet passes through the toll station can be increased to further improve the traveling efficiency of the fleet.

In one embodiment, the first vehicle may receive passage certificate information from the roadside payment terminal, the passage certificate information indicating that the vehicle has completed the payment and can pass through the corresponding toll station. In the case that the passage certificate information includes a passage certificate corresponding to a toll station, the first vehicle can receive the passage certificate information and then further forward the passage certificate information to the second vehicle in the fleet; and in the case that the passage certificate information includes a passage certificate corresponding to a toll station and corresponding vehicle information, the first vehicle can receive the passage certificate information and then further send the passage certificate therein and vehicle information of the second vehicle as the passage certificate information to the second vehicle in the fleet. Therefore, all vehicles in the fleet have a passage certificate and can quickly pass through the corresponding toll station based on this passage certificate.

In one embodiment, the first vehicle may delete the payment request information of the second vehicle from the payment request information of the fleet in response to the second vehicle leaving the fleet, so as to avoid the abnormality of overpayment.

In one embodiment, in the case that a new vehicle (e.g. a third vehicle) in the fleet passes the verification and joins, the first vehicle will receive vehicle information from the third vehicle and an identity of a previous toll station in order to facilitate the generation of payment request information for the fleet; and meanwhile, the first vehicle will send the vehicle information of the third vehicle to the fleet operation management platform in order to facilitate the fleet operation management platform to manage the fleet.

It is to be noted that the first vehicle in this embodiment, as a vehicle responsible for payment, needs to add or delete identity information and payment information of corresponding following vehicles to or from the payment request information of the fleet in the case that other vehicles (e.g., the second vehicle and the third vehicle) in the fleet join in or leave from the fleet.

Therefore, the first vehicle is responsible for the uniform payment of tolls for the entire fleet. Compared with a mode of separate payment of vehicles in a fleet one by one, the payment method for a fleet in this embodiment is more efficient, and meanwhile avoids the interference caused by other social vehicles to the fleet during the separate payment process of the vehicles in the fleet, thereby avoiding the increase in difficulty of developing automatic driving systems in response to such interferences.

### Embodiment 2

This embodiment of the present invention provides an automatic driving fleet payment system. As shown in FIG. 2, the fleet payment system includes a vehicle-mounted terminal 21, a roadside payment terminal 22, a payment server 23 and a fleet operation management platform 24, wherein the vehicle-mounted terminal 21 may preferably be configured to implement the process of the payment method for a fleet in Embodiment 1. In practice, an automatic driving fleet consists of a first vehicle and at least one second vehicle, wherein the first vehicle and the second vehicle may be equipped with the vehicle-mounted terminal 21, respectively.

The vehicle-mounted terminal 21 may implement the interconnection between vehicles, between the vehicle and the roadside payment terminal 22, as well as between the vehicle and the fleet operation management platform 24, in order to implement the payment of the entire fleet.

The roadside payment terminal 22 may function as the roadside payment terminal in Embodiment 1. Specifically, the roadside payment terminal 22 may be installed at a toll station, and configured to broadcast an identity of a toll station, as well as opening situations of respective lanes and passable models. Meanwhile, the roadside payment terminal 22 is configured to implement an interaction with the vehicle-mounted terminal 21 and the payment server 23, send the payment request information of the fleet to the payment server 23 to implement billing, and forward the fleet payment information from the payment server to the vehicle-mounted terminal 21.

The payment server 23 may function as the payment server in Embodiment 1. Specifically, the payment server 23 may be configured to perform billing according to the payment request information uploaded by the vehicle-mounted terminal 21, and send the fleet payment information to the roadside payment terminal 22, such that the vehicle-mounted terminal 21 performs the payment.

The fleet operation management platform 24 may function as the fleet operation management platform in Embodiment 1. Specifically, this platform is configured to implement an application for network access of operating vehicles and maintenance of an operation network whitelist. Furthermore, in the case that a vehicle joins the fleet, this platform will review identity information and payment information uploaded by the joined vehicle to ensure the authenticity of the payment information uploaded by the joined vehicle. In the case that the vehicle-mounted terminal 21 initiates an auxiliary payment request to this platform, this platform may implement the payment of the fleet by interaction with the payment server 23.

For ease of description, a vehicle in which the vehicle-mounted terminal 21 is installed and the vehicle-mounted terminal 21 is in an operating state is referred to as the first vehicle, and other vehicles in the fleet are referred to as the second vehicles. The scheme will be described below in the case that the first vehicle is regarded as a leading vehicle and the second vehicle is a following vehicle. However, it is to be noted that in practice, the first vehicle can be located anywhere in the fleet.

The following vehicle, when joining the fleet, needs to send identity information and payment-related information (e.g., previous toll station identity information, and the number of vehicle axles) to the leading vehicle, and after the identity information is verified, can follow a driving path of the leading vehicle or drive according to received driving instructions from the leading vehicle. For example, the leading vehicle, when passing through a high-speed toll station, may instruct the following vehicle to pass through a lane following the leading vehicle, or instruct the following vehicle to drive in another selected lane.

In the specific implementation process, the vehicle-mounted terminal 21 can add or delete identity information and payment information of the corresponding following vehicle to or from the fleet payment information in the case that the following vehicle joins in or leaves from the fleet. The vehicle-mounted terminal 21, after entering a toll station area, may select an open non-artificial toll lane in combination with a toll lane type and road conditions in a third-party or self-built high-precision map, as well as a lane opening status broadcast by the roadside payment terminal 22. The vehicle-mounted terminal 21, after receiving the toll station identity information broadcast by the roadside payment terminal 22, uploads the fleet payment information to the roadside payment terminal 22. In the case that the leading vehicle is equipped with an electronic payment terminal, the electronic payment terminal has a payment function and can complete the payment of the fleet; and in the case of payment failure caused when the leading vehicle is not equipped with an electronic payment terminal or the electronic payment terminal is incompatible with the roadside payment terminal or caused by other reasons, the vehicle-mounted terminal 21 sends an auxiliary payment request to the fleet operation management platform 24.

It is to be noted that the electronic payment terminal may be provided independently of the vehicle-mounted terminal 21, or may be provided in combination with the vehicle-mounted terminal 21, which will not be limited in the present invention.

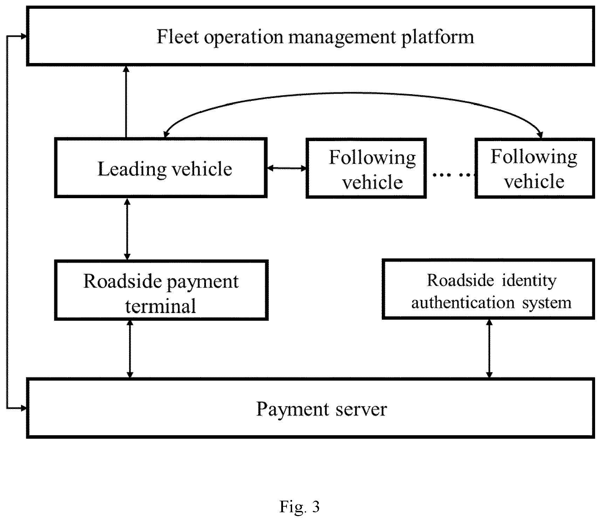

FIG. 3 is an exemplary structural block diagram of an automatic driving fleet payment system according to an embodiment of the present invention. As shown in FIG. 3, this exemplary system includes a vehicle-mounted terminal provided on a leading vehicle (only the leading vehicle is displayed in FIG. 3), a roadside payment terminal, a roadside identity authentication system, a payment server and a fleet operation management platform.

The roadside identity authentication system may adopt an image identification technology or a radio frequency identification technology (RFID). The roadside identity authentication system can acquire a vehicle image through a camera, etc., then identify the vehicle or body QR code, etc., and identify information of vehicles that pass through a toll lane (e.g., vehicle identity information and the number of vehicle axles). The roadside identity authentication system can also further communicate with a weighing apparatus at the toll station to obtain vehicle's load information.

In one embodiment, the vehicle-mounted terminal may receive passage certificate information from the roadside payment terminal in response to the completion of payment, the passage certificate information indicating that the vehicle has completed the payment and can pass through the corresponding toll station. The roadside payment terminal may also send the passage certificate information to the roadside identity authentication system. In the case that the passage certificate information includes a passage certificate, the roadside identity authentication system, in response to the vehicle passing through a toll station, authenticates passing vehicles according to the passage certificate and releases the vehicle with the passage certificate of the corresponding toll station. Meanwhile, in order to make the process of fleet payment control more secure and reliable, the passage certificate information received by each vehicle may include a passage certificate and corresponding vehicle information (e.g., vehicle identity information, vehicle load information, and number of vehicle axles), such that the roadside identity authentication system can further authenticate a matching relationship between the vehicle identity information or characteristics and the passage certificate, thereby avoiding a vehicle that has the passage certificate illegally/erroneously from passing.

Furthermore, the roadside identity authentication system can also send the identified vehicle identity information and characteristics to the payment server, such that the payment server authenticates the vehicle payment request information and the actual fleet vehicle information in order to find the payment abnormality and perform a supplementary payment or refund in time.

This embodiment of the present invention will be described in detail below with reference to the exemplary system shown in FIG. 3.

### Embodiment 3

In this embodiment, the vehicle-mounted terminal 21 does not include an electronic payment terminal, i.e., the vehicle-mounted terminal 21 can not perform a payment operation.

In this embodiment, a relationship among respective parts is as follows: an automatic driving leading vehicle VI, a following vehicle V2 and a following vehicle V3 have all passed a qualification review of a fleet operation management platform PM, and are all vehicles on an operation network whitelist of the fleet operation management platform PM. V1 is driving on a highway, while V2 and V3 request to form an operation fleet with V1. If there is a toll station in front of the traveling route, a roadside payment terminal RSU1 at the toll station broadcasts current toll station identity information and an opening status of a non-artificial toll lane, receives payment request information (or fleet payment information) from VI, and meanwhile forwards the payment request information to a payment server S. When the fleet passes through the toll station, a roadside identity authentication system VS1 will perform comparison authentication on a vehicle identity and characteristics of a passing vehicle with the payment request information of the fleet. VI, V2 and V3 are all equipped with intelligent vehicle-mounted terminals OBU1, OBU2 and OBU3, which can achieve the interconnection between vehicles, between the fleet and the roadside payment terminal, as well as between the fleet and the fleet operation management platform.

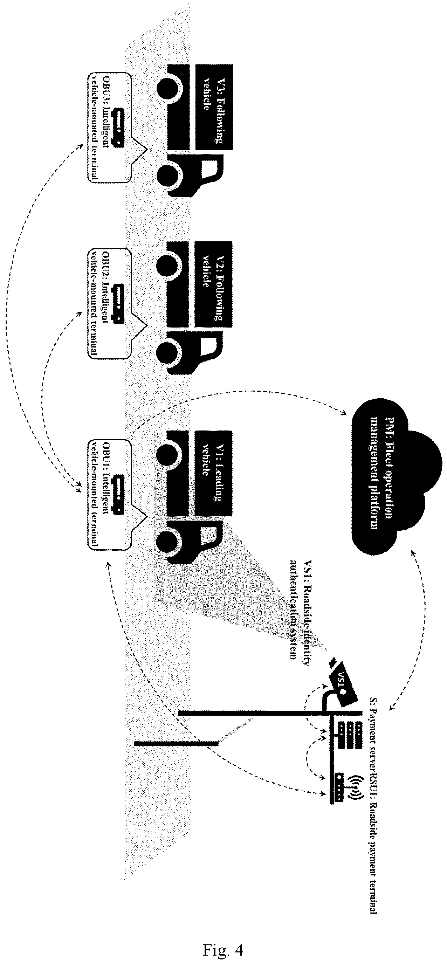

FIG. 4 is a schematic diagram of a payment scenario I of an automatic driving fleet according to an embodiment of the present invention. A fleet payment process based on the scenario of FIG. 4 includes the following steps.

In step 1: V2 and V3 apply for a fleet with VI, and when joining the fleet, upload identity information and information about their own historical payment, including: number of axles, mileage, and a previous toll station identity, to V1.

In step 2: V1 uploads the identity information and historical payment information uploaded by V2 and V3 to the fleet operation management platform PM for information verification, and then V2 and V3 form an automatic driving fleet with V1 since V2 and V3 are on a PM's operation whitelist, and the uploaded historical payment information is consistent with a platform database.

In step 3: after entering a toll area, V1 receives the identity information of the current toll station and toll lane opening status information broadcast by the roadside payment terminal RSU1, selects a channel in combination with non-artificial channel condition information of a toll station in a high-precision map and lane opening status information, and then automatically drives to a non-artificial payment lane in an open state, and V2 and V3 also follow V1 towards this payment lane.

In step 4: V1 uploads information on a toll station at which the fleet is currently arriving to the fleet operation management platform PM.

In step 5: V1 uploads the payment request information of the entire fleet, including: respective previous toll station IDs, numbers of vehicle axles and mileage of VI, V2, V3, to RSU1.

In step 6: RSU1 forwards the payment request information to the payment server S, which calculates a fee and sends the fleet payment information to RSU1.

In step 7: RSU1 sends the fleet payment information to VI, and since V1 is not equipped with an electronic payment apparatus, V1 sends an auxiliary payment request and the fleet payment information to PM.

In step 8: the fleet operation management platform PM performs a payment to the payment server S according to the fleet payment information.

In step 9: the payment server S feeds a payment result back to RSU1, and RSU1 sends passage certificate information of the fleet to V1.

In step 10: the roadside identity authentication system VS1 identifies the vehicle identities and characteristics of the passing vehicles one by one based on the passage certificate information received from RSU1 while the fleet passes through a toll lane.

In step 11: the fleet quickly passes through the lane without the need to stop if the roadside identity authentication system finds no abnormality.

### Embodiment 4

In this embodiment, the vehicle-mounted terminal 21 includes an electronic payment terminal P1 which is incompatible with RSU1, such that the vehicle-mounted terminal 21 can not perform a payment operation.

A relationship among respective parts in Embodiment 4 is the same as a relationship among the respective parts in Embodiment 3, and will not be repeated herein.

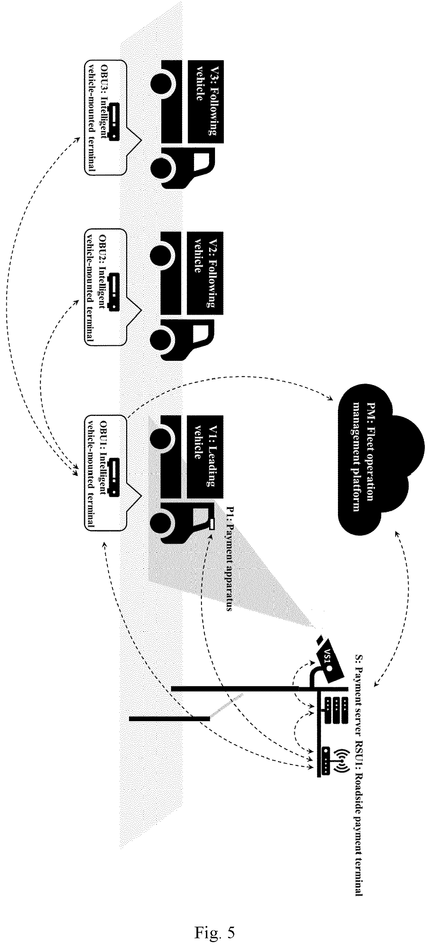

FIG. 5 is a schematic diagram of a payment scenario II of an automatic driving fleet according to an embodiment of the present invention. A fleet payment process based on the scenario of FIG. 5 includes the following steps.

Steps 1 to 6 are the same as steps 1 to 6 in Embodiment 3, which will not be repeated herein, and a description will be made below starting from step 7.

In step 7: RSU1 sends the fleet payment information to VI, and V1 pays a fleet's toll through PI.

In step 8: P1 fails to pay since P1 is incompatible with RSU1, and V1 sends an auxiliary payment request and the fleet payment information to PM.

In step 9: the fleet operation management platform PM performs a payment to the payment server S according to the fleet payment information.

In step 10: the payment server S feeds a payment result back to RSU1, and RSU1 sends passage certificate information of the fleet to V1 and the roadside identity authentication system VS1.

In step 11: the roadside identity authentication system VS1 identifies the vehicle identities and characteristics of the passing vehicles one by one based on the passage certificate information received from RSU1 while the fleet passes through the toll lane.

In step 12: the fleet quickly passes through the lane without the need to stop if the roadside identity authentication system finds no abnormality.

### Embodiment 5

In this embodiment, the vehicle-mounted terminal 21 includes an electronic payment terminal P1 which is compatible with RSU1, such that the vehicle-mounted terminal 21 can perform a payment operation. In this embodiment, the vehicle-mounted terminal 21 performs a payment successfully, however, the roadside identity authentication system uploads a payment abnormally.

A relationship among respective parts in Embodiment 5 is the same as a relationship among the respective parts in Embodiment 3, and will not be repeated herein.

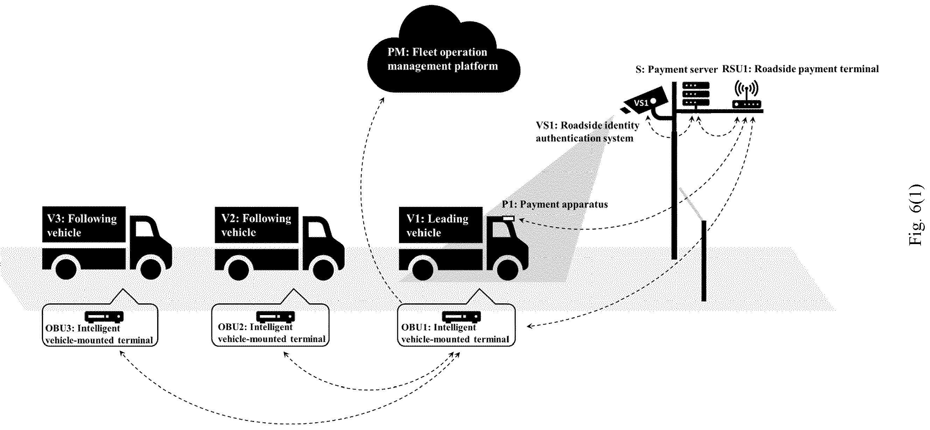

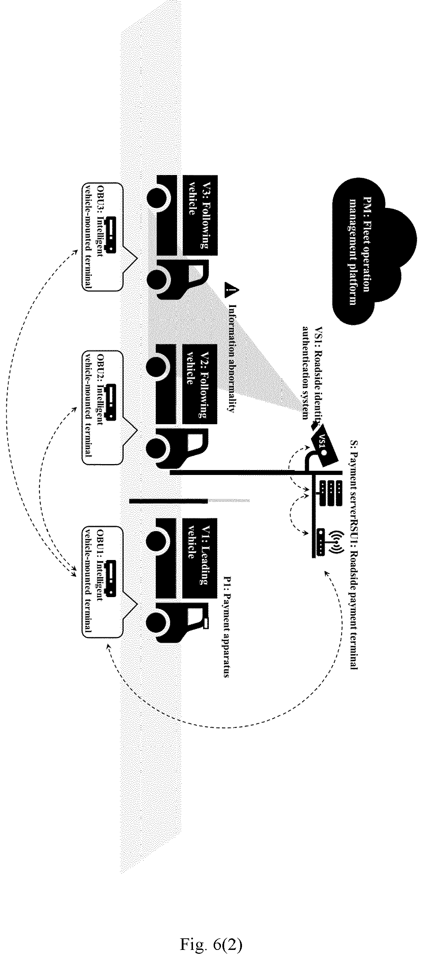

FIG. 6(1) and FIG. 6(2) are schematic diagrams of a payment scenario III of an automatic driving fleet according to an embodiment of the present invention, wherein FIG. 6 (1) illustrates a payment phase process of the scenario III, and FIG. 6 (2) illustrates an authentication phase process of the scenario III. As shown in FIG. 6(1) and FIG. 6(2), a fleet payment process based on the scenario of FIG. 6(1) and FIG. 6(2) includes the following steps.

Steps 1 to 6 are the same as steps 1 to 6 in Embodiment 3, which will not be repeated herein, and a description will be made below starting from step 7.

In step 7: RSU1 sends the fleet payment information to VI, and V1 pays a fleet's toll successfully through PI.

In step 8: RSU1 sends passage certificate information of the fleet to V1 and the roadside identity authentication system VS1.

In step 9: the roadside identity authentication system VS1 identifies the vehicle identities and characteristics of the passing vehicles one by one based on the passage certificate information received from RSU1 while the fleet passes through a toll lane.

In step 10: VS1 identifies that the actual number of axles of V3 is greater than the unloaded number of axles, and VS1 uploads supplementary payment abnormality information to the payment server S.

In step 11: S calculates a fee and sends the supplementary payment information to RSU1.

In step 12: RSU1 sends the supplementary payment information to VI, and V1 pays a fleet's toll through PI.

### Embodiment 6

In this embodiment, the vehicle-mounted terminal 21 includes an electronic payment terminal P1 which is compatible with RSU1, such that the vehicle-mounted terminal 21 can perform a payment operation. In this embodiment, the vehicle-mounted terminal 21 performs a payment successfully, however, the roadside identity authentication system uploads a refund abnormally.

A relationship among respective parts in Embodiment 6 is the same as a relationship among the respective parts in Embodiment 3, and will not be repeated herein.

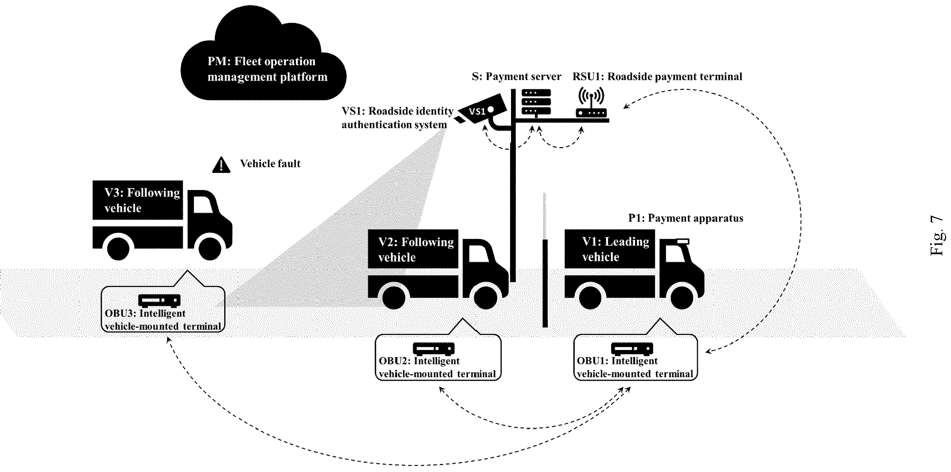

FIG. 7 is a schematic diagram of a payment scenario IV of an automatic driving fleet according to an embodiment of the present invention. As shown in FIG. 7, a fleet payment process based on the scenario of FIG. 7 includes the following steps.

Steps 1 to 6 are the same as steps 1 to 6 in Embodiment 3, which will not be repeated herein, and a description will be made below starting from step 7.

In step 7: RSU1 sends the fleet payment information to VI, and V1 pays a fleet's toll successfully through PI.

In step 8: RSU1 sends passage certificate information of the fleet to V1 and the roadside identity authentication system VS1.

In step 9: the roadside identity authentication system VS1 identifies the vehicle identities and characteristics of the passing vehicles one by one based on the passage certificate information received from RSU1 while the fleet passes through a toll lane.

In step 10: V3 cannot continue to drive through the toll lane due to a system failure, and VS1 identifies that the passing vehicle does not include V3, and uploads refund abnormality information to the payment server S.

In step 11: S calculates a fee and sends refund information to RSU1.

In step 12: RSU1 sends the refund information to VI, and V1 receives a refund of a fleet's toll through PI.

In step 13: when V3 leaves the fleet, V1 deletes the V3's identity information and payment-related information from the fleet information.

As can be seen from the above description, after the fleet completes the payment, whether an actually passing fleet matches fleet information in a payment request can be found in time by means of an authentication operation of the roadside identity authentication system; and in the case that the actually passing fleet does not match the fleet information in the payment request, the fleet can be reminded to perform a supplementary payment or refund by uploading an abnormality mode, thereby implementing toll clearing quickly. The loss caused by payment missing of the fleet to owners in the highway and the loss caused by overpayment of the fleet to a fleet operator are avoided in the case of ensuring that the fleet continuously passes through a toll lane without stop.

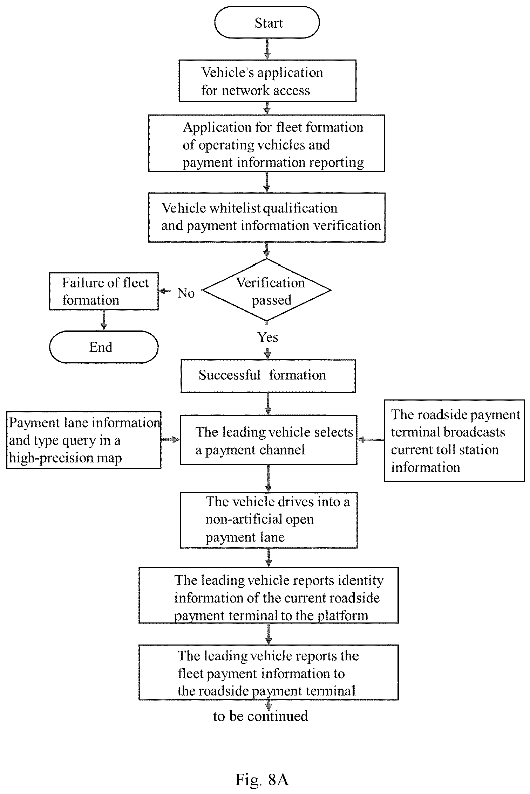

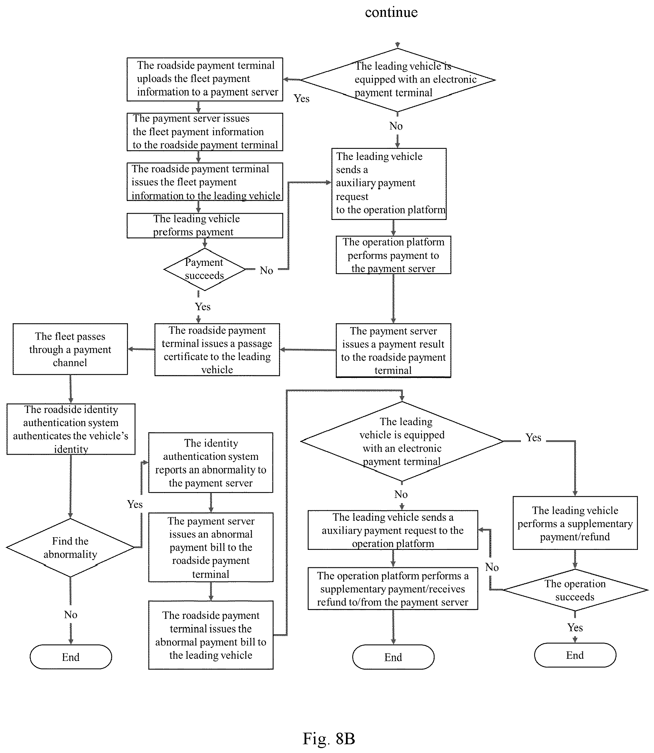

FIG. 8 is a detailed payment flowchart of an automatic driving fleet according to an embodiment of the present invention. As shown in FIG. 8, this process includes:
a first phase: fleet formation and payment information collection

In step 1: an autonomous vehicle applies for an operation qualification to a fleet operation management platform (or hereinafter referred to as an operation platform) before joining the operation, and joins an operation network whitelist.

In step 2: in the actual road operation process, vehicles in the operation network whitelist can form an automatic driving fleet of no less than two vehicles, where a leading vehicle in the fleet is responsible for completing the fleet payment, and the other vehicles are following vehicles.

In step 3: the following vehicles upload their payment-related information, including: numbers of axles, mileages, previous toll station IDs and other information, to the leading vehicle when joining the fleet.

In step 4: the leading vehicle uploads the historical payment information uploaded by the following vehicle to the fleet operation management platform for information verification, and if the verification is passed, allows the following vehicle to join the fleet.

### A second phase: entering a toll area for payment

In step 5: the roadside payment terminal broadcasts current toll station information in real time, including: current toll station identity information, an opening condition of a toll lane and allowed passable models, the leading vehicle selects an appropriate channel in combination with information on a non-artificial channel at a toll station in a high-precision map and current toll station information provided by the roadside intelligent payment terminal, and then automatically drives to a non-artificial payment lane in an open state, and the following vehicles also travels following the leading vehicle.

In step 6: the leading vehicle uploads information on a toll station at which the fleet is currently arriving (or identity information of the current roadside payment terminal) to the fleet operation management platform.

In step 7: the leading vehicle uploads the payment request information of the fleet to the roadside payment terminal, the payment request information of the fleet including payment request information of all the vehicles in the fleet.

There are two cases where the leading vehicle is equipped with an electronic payment apparatus and the leading vehicle is not equipped with an electronic payment apparatus, which are described below, respectively.
A: the leading vehicle is equipped with an electronic payment apparatus.

In step 8: if the leading vehicle is equipped with an electronic payment apparatus, the roadside payment terminal transmits payment request information of the fleet to a payment server, and the payment server determines a payment amount, and transmits the corresponding fleet payment information back to the roadside payment terminal.

In step 9: the roadside terminal sends the fleet payment information to the leading vehicle, and the leading vehicle completes the payment through the electronic payment apparatus.

In step 10: if the payment is successful, the roadside payment terminal sends passage certificate information to the leading vehicle, and the leading vehicle synchronizes the fleet payment information to the fleet operation management platform; and if the payment fails, the leading vehicle sends an auxiliary payment request and the fleet payment information to the fleet operation management platform.

In step 11: the fleet operation management platform performs a payment directly to the payment server according to the fleet payment information.

In step 12: the payment server feeds a payment result back to the roadside payment terminal, and the roadside payment terminal sends a passage certificate to the leading vehicle and the roadside identity authentication system.

B: the leading vehicle is not equipped with an electronic payment apparatus.

In step 13: if the leading vehicle is not equipped with an electronic payment apparatus, the leading vehicle sends an auxiliary payment request directly to the fleet operation management platform.

In step 14: the fleet operation management platform performs a payment directly to the payment server according to the fleet payment information.

In step 15: the payment server feeds a payment result back to the roadside payment terminal, and the roadside payment terminal sends passage certificate information to the leading vehicle and the roadside identity authentication system.

A third phase: authentication of a payment result of a passing vehicle

In step 16: the roadside identity authentication system authenticates the passing vehicle according to the passage certificate information, and releases the vehicle with a passage certificate of the corresponding toll station. Further, in order to make the process of fleet payment control more secure and reliable, the roadside identity authentication system can further authenticate a matching relationship between the vehicle identity information or characteristics and the passage certificate, thereby avoiding a vehicle that has the passage certificate illegally/erroneously from passing.

In step 17: the fleet quickly passes through the lane without the need to stop if the roadside identity authentication system finds no abnormality.

In step 18: the roadside identity authentication system uploads one or more pieces of supplementary payment abnormality information to the payment server, in the case that the roadside identity authentication system finds a supplementary payment abnormality, for example, the passing fleet includes a vehicle that does not upload payment request information, or the payment request information of the fleet is inconsistent with an actual situation, for example, the number of vehicle axles is greater than the number of axles in the payment request information. The roadside identity authentication system uploads one or more pieces of refund abnormality information to the payment server, in the case that the roadside identity authentication system finds a refund abnormality, for example, the passing fleet does not include a corresponding vehicle in the payment request information, or the actual number of vehicle axles is less than the number of axles in the payment request information. In this process, the fleet can pass through the lane without the need to stop.

In step 19: the payment server sends an abnormal payment bill to the roadside payment terminal.

In step 20: the roadside payment terminal sends the abnormal payment bill to the leading vehicle.

In step 21: the leading vehicle handles the abnormal payment bill, and performs a supplementary payment or receive refund for an abnormal situation. If the leading vehicle is not equipped with an electronic payment apparatus or fails to complete the supplementary payment or receive refund, the leading vehicle sends an auxiliary payment request and the abnormal payment bill to the fleet operation management platform.

In step 22: the fleet operation management platform performs clearing on the abnormal payment bill directly to the payment server according to an abnormal payment request, and performs a supplementary payment or receives refund caused by the abnormal situation.

As can be seen from the above description, in this embodiment of the present invention, the leading vehicle uniformly completes the payment of all the vehicles in the fleet, and the following vehicles only need to upload the payment information to the leading vehicle, without having to complete the payment process themselves, thereby saving the interaction and time cost caused by separate vehicle payment, and avoiding the traffic congestion caused when the vehicles in the fleet pass through a toll station. Meanwhile, since the leading vehicle uniformly completes the fleet payment, the cost of installing electronic payment terminals for other vehicles in the fleet can also be saved. Furthermore, in this embodiment of the present invention, the fleet operation management platform performs an auxiliary payment, which can further guarantee the effective completion of the fleet payment, avoid the bad credit impact or fines caused by the failure of the payment, and also avoid the loss caused by overpayment to fleet operators, thereby further improving the traveling efficiency of the fleet.

### Embodiment 7

This embodiment also provides an electronic device that may be a desktop computer, a tablet computer, a mobile terminal, or the like, and the embodiment is not limited thereto. In this embodiment, the electronic device may be implemented according to Embodiment 1 and Embodiment 2, with the contents incorporated therein and not repeated.

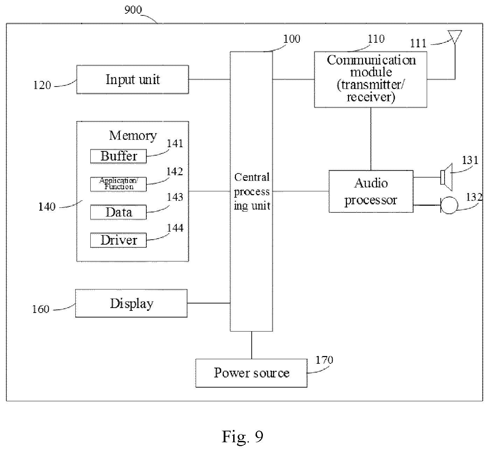

FIG. 9 is a schematic block diagram of the system composition of an electronic device 900 according to an embodiment of the present invention. As shown in FIG. 9, the electronic device 900 may include a central processing unit 100 and a memory 140, which is coupled to the central processing unit 100. It is noteworthy that FIG. 9 is exemplary. Other types of structures may also be used to complement or replace this structure, thereby achieving a telecommunication function or other functions.

In one embodiment, a fleet payment function can be integrated into the central processing unit 100. The central processing unit 100 may be configured to perform the following control:
sending payment request information of a fleet to a roadside payment terminal, such that the roadside payment terminal sends the payment request information of the fleet to a payment server, the payment request information of the fleet including payment request information of a first vehicle and payment request information of at least one second vehicle, the payment request information of the first vehicle being generated based on an identity of a toll station corresponding to the first vehicle, and the payment request information of the second vehicle being generated based on an identity of a toll station corresponding to the second vehicle;
receiving fleet payment information generated by the payment server from the roadside payment terminal; and
performing a payment operation according to the fleet payment information.

As can be seen from the above description, according to the electronic device provided by this embodiment of the present application, the payment request information of the fleet is sent to the roadside payment terminal and forwarded to the payment server, the fleet payment information from the payment server forwarded by the roadside payment terminal is then received, and the payment operation is then performed according to the fleet payment information, without separate payment of respective vehicles in the fleet, thereby ensuring that the fleet can pass the toll station smoothly and improving the traveling efficiency of the fleet.

In another implementation, the vehicle-mounted terminal may be configured separately from the central processing unit 100. For example, the vehicle-mounted terminal may be configured as a chip connected to the central processing unit 100, and a fleet payment function is achieved by the control of the central processing unit.

As shown in FIG. 9, the electronic device 900 may also include a communication module 110, an input unit 120, an audio processing unit 130, a display 160, and a power source 170. It is noted that the electronic device 900 does not necessarily include all of the components shown in FIG. 9. Furthermore, the electronic device 900 may also include components not shown in FIG. 9, which may refer to the prior art.

As shown in FIG. 9, the central processing unit 100, sometimes also referred to as a controller or an operating control, may include a microprocessor or any other processor apparatus and/or a logic apparatus. The central processing unit 100 receives an input and controls the operation of the various components of the electronic device 900.

The memory 140 may, for example, be one or more of a buffer, a flash memory, a hard drive, a removable medium, a volatile memory, a non-volatile memory, or other suitable apparatuses. The memory 140 may be configured to store the above-mentioned failure-related information, and also store a program of executing the related information. The central processing unit 100 may execute this program stored by the memory 140, thereby implementing information storage or processing, or the like.

The input unit 120 provides an input to the central processing unit 100. The input unit 120 is, for example, a key or a touch input apparatus. The power source 170 is configured to power up the electronic device 900. The display 160 is configured to display images and texts or other display objects. The display may be an LCD display, but is not limited thereto.

The memory 140 may be a solid-state memory, for example, a read-only memory (ROM), a random access memory (RAM), a SIM card, or the like. It may also be such a memory that stores information, which can be selectively erased and contains more data, even when the power is cut off. An example of the memory is sometimes referred to as EPROM or the like. The memory 140 may also be some apparatus of other type. The memory 140 includes a buffer memory 141 (sometimes referred to as a buffer). The memory 140 may include an application/function storage unit 142, the application/function storage unit 142 being configured to store applications and function programs or perform the operation of the electronic device 900 through the central processing unit 100.

The memory 140 may also include a data storage unit 143 configured to store data, such as contacts, digital data, pictures, sounds, and/or any other data used by the electronic device. A driver storage unit 144 of the memory 140 may include various drivers of the electronic device for a communication function and/or for performing other functions of the electronic device (e.g., a messaging application, and an address book application).

The communication module 110 is a transmitter/receiver 110 that transmits and receives signals via an antenna 111. The communication module (transmitter/receiver) 110 is coupled to the central processing unit 100 to provide input signals and receive output signals, which may be in line with a case for a conventional mobile communication terminal.

Based on different communication technologies, a plurality of communication modules 110, such as a cellular network module, a Bluetooth module, and/or a wireless LAN module, may be provided in the same electronic device. The communication module (transmitter/receiver) 110 is also coupled to a speaker 131 and a microphone 132 via the audio processor 130 to provide an audio output via the speaker 131 and to receive an audio input from the microphone 132, thereby achieving a usual telecommunication function. The audio processor 130 may include any suitable buffer, decoder, amplifier, and the like. Further, the audio processor 130 is also coupled to the central processing unit 100, such that sound recording can be made on the present audio processor via the microphone 132, and the sound stored in the present audio processor can be played via the speaker 131.

An embodiment of the present invention further provides a computer-readable storage medium configured to store a computer program therein, the computer program, when executed by a processor, being configured to implement the steps of the payment method for a fleet according to Embodiment 1.

An embodiment of the present invention further provides a storage medium configured to store a computer-readable program therein, the computer-readable program causing a computer to perform the steps of the payment method for a fleet according to Embodiment 1 in an electronic device.

The preferred embodiments of the present invention are further described below by reference to the accompanying drawings. Many features and advantages of these embodiments are clear according to the detailed description. Therefore, the accompanying claims are intended to cover all these features and advantages within the scope of these embodiments. Furthermore, since a person skilled in the art is prone to think of many modifications and changes, it is not intended to limit the embodiments of the prevent invention to the precise structure and operations shown and described, but to cover all suitable modifications and equivalents that fall within its scope.

It should be understood by a person skilled in the art, that the embodiments of the present invention may be provided as methods, systems, or computer program products. Therefore, the present invention may adopt embodiments in forms of full hardware, full software, or a combination of software and hardware. Furthermore, the present invention may adopt forms of computer program products executed on one or more computer usable storage media (including but not being limited to disk storage, CD-ROM and optical storage, etc.) containing computer usable program codes.

The present invention is described with reference to the flowcharts and/or block diagrams of the method, the device (system), and the computer program product according to the embodiments of the present invention. It should be understood that each process and/or block in the flowcharts and/or block diagrams, and combinations of processes and/or blocks in the flowcharts and/or block diagrams, may be realized by computer program instructions. These computer program instructions may be provided to a generate-purpose computer, a special-purpose computer, an embedded processor, or processors of other programmable data processing devices, to create a machine, such that an apparatus for realizing functions designated in one or more processes in the flowcharts and/or in one or more blocks in the block diagrams, may be created by instructions performed by a computer or processors of other programmable data processing devices.

These computer program instructions may further be stored in a computer readable storage that can boot a computer or other programmable data processing devices to work in a specific way, such that a manufactured goods including an instruction device may be created by the instructions stored in the said computer readable storage, and the said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

Specific embodiments are applied to illustrate the principles and implementations of the present invention, and the description of the above embodiments is only used to help the understanding of the methods and core ideas of the present invention. At the same time, for those of ordinary skill in the art, according to the ideas of the present invention, there will be changes in the specific implementations and the scope of application. In summary, the content of the present description should not be construed as a limitation of the present invention.

## Claims

1. A payment method for a fleet, the fleet comprising a first vehicle and at least one second vehicle, the method comprising:
sending payment request information of the fleet to a roadside payment terminal, such that the roadside payment terminal sends the payment request information of the fleet to a payment server;
receiving, from the roadside payment terminal, fleet payment information generated by the payment server; and
performing, according to the fleet payment information, a payment operation;
wherein the payment request information of the fleet comprises payment request information of the first vehicle and payment request information of the at least one second vehicle;
the payment request information of the first vehicle is generated based on identities of toll stations corresponding to the first vehicle; and
the payment request information of the second vehicle is generated based on identities of toll stations corresponding to the second vehicle.

2. The method according to claim 1, further comprising:
receiving an identity of a current toll station from the roadside payment terminal; and
sending the identity of the current toll station to a fleet operation management platform;
wherein the current toll station is one of the toll stations corresponding to the first vehicle; or
the current toll station is one of the toll stations corresponding to the second vehicle.

3. The method according to claim 2, further comprising:
sending, in response to failure of performing the payment operation, the fleet payment information to the fleet operation management platform, such that the fleet operation management platform performs the payment operation.

4. The method according to claim 1, further comprising:
receiving, from the roadside payment terminal, payment abnormality information generated by the payment server;
wherein the payment abnormality information indicates that an amount due from the fleet is inconsistent with an amount in the fleet payment information.

5. The method according to claim 4, further comprising:
in response to the amount due from the fleet being greater than the amount in the fleet payment information, performing, according to the payment abnormality information, a supplementary payment operation.

6. The method according to claim 5, further comprising:
sending, in response to failure of performing the supplementary payment operation, the payment abnormality information to the fleet operation management platform, such that the fleet operation management platform performs a corresponding supplementary payment operation.

7. The method according to claim 4, further comprising:
in response to the amount due from the fleet being less than the amount in the fleet payment information, receiving refund information from the roadside payment terminal.

8. The method according to claim 2, further comprising:
receiving, from the roadside payment terminal, lane opening status information of the current toll station; and
selecting, based on the lane opening status information of the current toll station, at least one passable lane.

9. The method according to claim 8, further comprising:
sending, in response to selecting one passable lane, the selected passable lane to the at least one second vehicle, such that the at least one second vehicle drives in the selected passable lane; or
sending, in response to selecting a plurality of passable lanes, the selected passable lanes to the at least one second vehicle, such that each vehicle of the at least one second vehicle drives in one of the selected passable lanes.

10. The method according to claim 8, wherein the selecting, based on the lane opening status information of the current toll station, the passable lane comprises:
selecting, based on received traffic condition information and the lane opening status information of the current toll station, the passable lane.

11. The method according to claim 2, further comprising:
receiving, in response to completion of the payment operation, passage certificate information from the roadside payment terminal;
wherein the passage certificate information indicates that a vehicle is passable at the current toll station.

12. The method according to claim 11, wherein the passage certificate information comprises a passage certificate, and the method further comprises:
forwarding, after the first vehicle receives the passage certificate information from the roadside payment terminal, the passage certificate to the at least one second vehicle.

13. The method according to claim 11, further comprising:
deleting, in response to the second vehicle leaving the fleet, the payment request information of the second vehicle from the payment request information of the fleet.

14. A device, comprising a memory, a processor, and a computer program that is stored in the memory and operable on the processor, the processor, when executing the program, being configured to implement the steps of the payment method according to any one of claims 1 to 13.

15. A computer-readable storage medium, configured to store a computer program therein, the computer program, when executed by a processor, being configured to implement the steps of the payment method according to any of claims 1 to 13.
